# EUROPÄISCHE PATENTSCHRIFT

(11) **EP 1 687 549 B1**
(45) Veröffentlichungstag und Bekanntmachung des Hinweises auf die Patenterteilung: **14.05.2008**
(21) Anmeldenummer: 04803312.0
(22) Anmeldetag: 27.11.2004
(51) Int. Cl.: F16F 7/12

(54) **ENERGIEABSORPTIONSELEMENT**
ENERGY ABSORPTION ELEMENT
ELEMENT AMORTISSEUR

(30) Priorität: 29.11.2003 DE 10355913; 29.11.2003 DE 20318501 U
(43) Veröffentlichungstag der Anmeldung: 09.08.2006
(73) Patentinhaber: Erbslöh Aluminium GmbH, 42553 Velbert (DE)
(72) Erfinder: SUCKE, Norbert, William, 47269 Duisburg (DE)
(74) Vertreter: Mentzel, Norbert
(86) Internationale Anmeldenummer: PCT/EP2004/013475
(87) Internationale Veröffentlichungsnummer: WO 2005/052404

(56) Entgegenhaltungen:
- WO-A-02/102539
- DE-A1- 19 526 707
- DE-C1- 19 709 171
- DE-U1- 9 218 388
- US-B1- 6 258 465
- PATENT ABSTRACTS OF JAPAN Bd. 009, Nr. 179 (M-399), 24. Juli 1985 (1985-07-24) & JP 60 049144 A (YOKOHAMA GOMU KK; others: 01), 18. März 1985 (1985-03-18)
- PATENT ABSTRACTS OF JAPAN Bd. 1997, Nr. 08, 29. August 1997 (1997-08-29) & JP 09 095188 A (KOBE STEEL LTD), 8. April 1997 (1997-04-08)

## Beschreibung

Die Erfindung betrifft ein Energieabsorbtionselement aus stranggepressten Mehrlcammerhohlprofilen, welche ein Flachprofilquerschnitt mit zwei parallelen Breitseiten und gewölbten oder ebenen Schmalseiten aufweisen. Ein solches Element ist aus der DE-C-19709171 bekannt.

Es ist bekannt, Aluminiumstrangpressprofile als energieabsorbierende Elemente zum Abbau der Stoßenergie in Fahrzeugen zu verwenden. In der deutschen Gebrauchsmusterschrift DE 92 18 388 ist ein Aufprallträger zum Einbau in eine Tür beschrieben.

Des Weiteren ist aus der DE 195 26 707 ein Aufprallträger bekannt, dessen Profil sich quer zur Längsachse erstreckt und am Querträger festgelegt ist. Bei diesem Aufprallträger handelt es sich um ein Mehrlcammerprofil. Um das Energieabsorbtionsvermögen solcher Strangpressprofile noch zu erhöhen, ist bei diesem bekannten energieabsorbierenden Element das Strangpressprofil mit einem Aluminiumschaum ausgefüllt. Eine solche Kostruktion besitzt aufgrund des Aluminiumschaumes eine gewichtsspezifisch hohe Energieabsorbtion. Es ist schwierig, das Verformungsverhalten solcher Profile einem bestimmten Anwendungszweck anzupassen. Dies ist ausschließlich durch die Variation der Wanddicke des Gehäuses möglich, da Aluminiumschaum nicht in dem gewünschten Maße reproduzierbar und mit der gleichen Porenanzahl oder Porengröße herstellbar ist.

Gewichtsspezifisch hohe Energieabsorbtionen werden auch durch Wabenkonstruktionen erzielt. Dabei werden harzgetränkte Papier-, Kunstsoff- oder Leichtmetall-Sechskantwaben zwischen zwei Deckblechen angeordnet. Der Einsatz solcher Wabenkonstruktionen hat den Nachteil, dass bei Verwendung unterschiedlicher Materialien das Recyceln aufwendig ist. Die Herstellung solcher Wabenkonstruktionen aus Leichtmetall erfolgt in der Regel aus Aluminiumblechen, die zu Prägeblechen umgeformt werden, wobei jeweils zwei Bleche durch Hartlöten miteinander verbunden werden, so dass sich zwischen ihnen Sechskanthohlräume ergeben. Eine solche Honigwabenstruktur ist in der internationalen Patentanmeldung WO 02/102539 gezeigt. Nicht dargestellt ist, wie mit einer solchen Struktur ein Energieabsorbtionselement mit vorbestimmten Verformungsverhalten erzielt werden kann.

Der Erfindung liegt die Aufgabe zu Grunde, ein energieabsorbierendes Element mit gewichtsspezifisch hoher Energieabsorbtion zu schaffen, das eine gewünschte Kraft-Verformungsweg-Kennlinie aufweist.

Die Aufgabe wird mit einem Energieabsorbtionselement der im Anspruch 1 definierten Art gelöst. Ein solches Energieabsorbtionselement lässt sich nach einem Verfahren gemäß Anspruch 21 herstellen. Das erfindungsgemäße Energieabsorbtionselement besitzt aufgrund der Verwendung von Mehrkammerhohlprofilen (Multi-Port-Profilen), insbesondere von Mikro-Multi-Portprofilen, eine sehr hohe gewichtsspezifische Energieabsorbtion. Es können beliebig viele unterschiedliche Mehrkammerhohlprofile zu einer Struktur miteinander verbunden werden. Die Mehrkammerhohlprofile werden durch Strangpressen aus einer Leichtmetalllegierung, vorzugsweise einer Aluminiumlegierung, hergestellt. Aufgrund der Materialgleichheit der gesamten Struktur lässt sich ein solches Energieabsorbtionselement nach Verwendung gut recyceln.

Aufgrund der ständig ansteigenden Sicherheitsanforderungen, insbesondere zum Schutz der Insassen in Kraftfahrzeugen, werden verschiedenartigste Absorbtionselemente im Bereich um die Fahrgastzelle eingebaut. Dies soll die Verletzungsgefahr bei einem Aufprall mindern, indem diese Absorbtionselemente so viel kinetische Energie wie möglich aufnehmen. Je nachdem in welchem Bereich eines Kraftfahrzeugs das Energieabsorbtionselement angeordnet werden soll bzw. welchen möglichen Stoßbelastungen ein Energieabsorbtionselement beim Einsatz auch in anderen Vorrichtungen ausgesetzt ist, lässt sich für das Energieabsorbtionselement eine gewünschte Kraft-Verformungsweg-Kennlinie einstellen, nämlich durch Auswahl der für den speziellen Einsatzfall gewünschten Mehrkammerhohlprofile. Die Anzahl der gleichen oder unterschiedlichen Mehrkammerhohlprofile kann beliebig variiert werden. Ebenso ist die Höhe und Breite dieser Profile, die Wandstärke der Außenwandung und der Kammerwände, die Anzahl der Kammern und die Ausrichtung der Profile zueinander entsprechend dem Anwendungszweck frei wählbar. Des Weiteren kann für verschiedene Mehrkammerhohlprofile eine unterschiedliche Legierung verwendet werden. Darüber hinaus lässt sich die Anordnung und Form der Stege für ein Mehrkammerhohlprofil unterschiedlich vorsehen, so dass ein bestimmtes, gewünschtes Knickverhalten einstellbar ist.

Die in einem Energieabsorbtionselement zusammengefassten, stranggepressten Mehrkammerhohlprofile weisen einen Flachprofilquerschnitt mit zwei parallelen Breitseiten auf. An diesen parallelen, ebenen Breitseiten sind die Mehrkammerhohlprofile (MP-Profile, MMP-Profile) miteinander verbunden. Eine solche Verbindung kann eine kraft- oder formschlüssige Verbindung über entsprechende Verbindungsmittel, eine Hartlötverbindung, eine Weichlötverbindung oder eine Klebeverbindung sein. Bei der Verwendung von MMP-Profilen ist aufgrund der geringen Wandstärke eine Klebeverbindung bevorzugt.

Eine hohe gewichtsspezifische Energieabsorbtion wird mit Mehrkammerhohlprofilen (MP-Profile, MMP-Profile) mit einer Vielzahl von Kammern, vorzugsweise mit mindestens drei Kammern erzielt. Das Übereinanderstapeln und Miteinanderverbinden solcher Mehrkammerhohlprofile führt zu einer Honigwaben ähnlichen Struktur. Jedoch lässt sich innerhalb des Energieabsorbtionselementes in Richtung der Krafteinwirkung, aufgrund der Auswahl von Mehrkammerhohlprofilen unterschiedlicher Höhe und unterschiedlichem Querschnitts, die Verformung des Energieabsorbtionselementes vorherbestimmen.

Es werden ausschließlich Mehrkammerhohlprofile mit einem Verhältnis von Breite zu Höhe im Bereich von 3:1 bis 40:1 verwendet. Die Wanddicke der Außenwandung dieser Mehrkammerhohlprofile liegt in einem Bereich von 0,15 bis 3 mm, vorzugsweise 0,15 bis 1 mm, besonders bevorzugt 0,15 bis 0,5 mm. Die Innenwände, die die Kammern innerhalb des Mehrkammerhohlprofiles begrenzen, weisen eine Wanddicke von 0,1 bis 3 mm, vorzugsweise 0,1 bis 1 mm, besonders bevorzugt 0,1 bis 0,5 mm auf.

Um eine gewichtsspezifisch hohe Energieabsorbtion zu erreichen, werden die Mehrkammerhohlprofile aus einem Leichtmetall bzw. einer Leichtmetalllegierung, vorzugsweise aus Aluminium oder einer Aluminiumlegierung hergestellt.

Das erfindungsgemäße Verfahren beeinhaltet das Strangpressen von Mehrkammerhohlproillsträngen, die einen Flachprofilquerschnitt mit zwei parallelen ebenen Breitseiten aufweisen. Diese Breitseiten sind über ebene oder gewölbte Schmalseiten miteinander verbunden. Die Breitseiten und Schmalseiten bilden die Außenwandung des Mehrkammerhohlprofiles. Die im Profil in Längsrichtung verlaufenden, benachbarten Kammern sind durch Innenwände von einander getrennt. Durch das Strangpressen lassen sich auf einfache Weise unterschiedliche Kammerquerschnitte bei Mehrkammerhohlprofilen herstellen. Nach dem Strangpressen wird der noch warme Hohlprofilstrang mit einem Verbindungsmittel beschichtet. Bei einem solchen Verbindungsmittel kann es sich um eine Zinkschicht für das Weichlöten, um eine Hartlotmischung bestehend aus einem Hartlot, einem Bindemittel und einem Flußmittel handeln. Des Weiteren ist es möglich, als Verbindungsmittel einen Klebstoff aufzutragen. Handelt es sich bei dem Klebstoff um einen warmaushärtbaren Klebstoff, so wird dieser erst auf dem Mehkammerhohlprofilstrang aufgetragen, wenn dieser auf eine Temperatur unterhalb der Wärmeaushärt-Temperatur des Klebstoffs abgekühlt ist.

Der aus der Strangpresse ausgetretene und beschichtete Mehrkammerhohlprofilstrang wird nach dem Abkühlen auf die gewünschte Länge der Mehrkammerhohlprofile abgelängt. Dieser Trennprozess kann im Pressenauslauf angeordnet sein oder örtlich davon getrennt. Bei einer örtlichen Trennung werden die Mehrkammerhohlprofilstränge zwischenzeitlich auf ein Coil aufgewickelt.

Für das gewünschte Energieabsorbtionselement werden die ausgewählten, gleichen oder unterschiedlichen Mehrkammerhohlprofile übereinander angeordnet und miteinander verbunden. Entsprechend dem ausgewählten Verbindungsmittel erfolgt die Verbindung durch Warmlöten, Hartlöten, über eine Clipsverbindung oder durch Kleben. Bestehen die Mehrkammerhohlprofile aus einer warmaushärtbaren .Legierung, erfolgt die Verbindung dieser Mehkammerhohlprofile durch Kleben, wobei in bevorzugter Weise das Warmaushärten und das Aushärten des Klebstoffs zur Verbindungsbildung der Mehrkammerhohlprofile in einem Verfahrensschritt erfolgen.

Ausführungsbeispiele der Erfindung werden im Folgenden anhand der Zeichnung noch näher erläutert. Es zeigen:
- Fig. 1: eine perspektivische Ansicht eines erfindungsgemäßen Energieabsorbtionselementes aus gleichen Mehrkammerhohlprofilen,
- Fig.2: eine perspektivische Ansicht eines Energieabsorbtionselementes aus unterschiedlichen Mehrkammerhohlprofilen,
- Fig. 3: eine perspektivische Ansicht eines Energieabsorbtionselementes aus unterschiedlichen Mehrkammerhohlprofilen,
- Fig. 4: eine perspektivische Ansicht eines Energieabsorbtionselementes aus gleichen Mehrlcammerhohlprofilen.

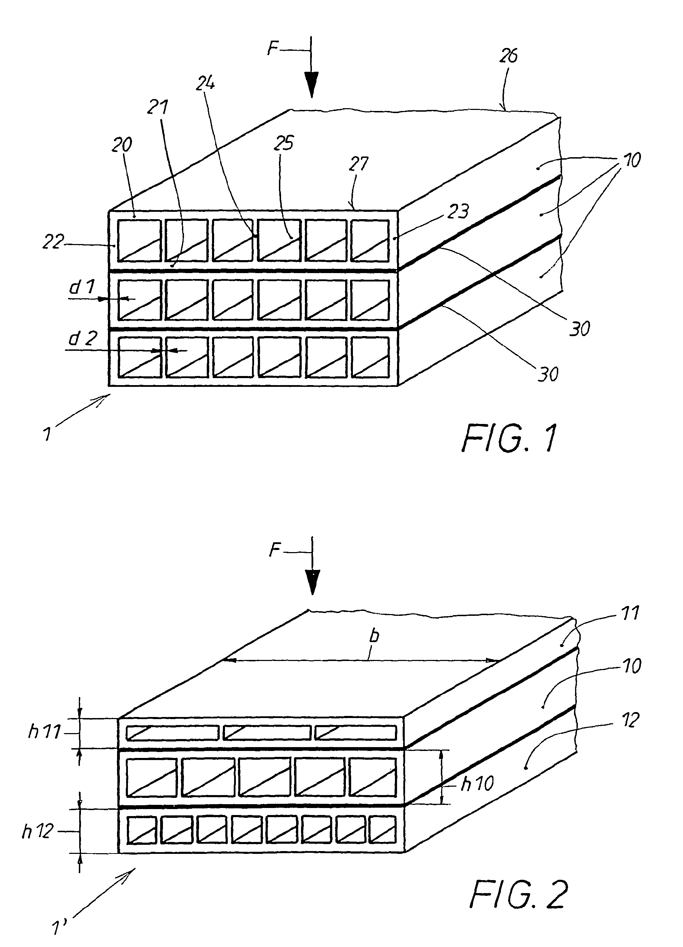

Die in den Figuren 1 bis 4 dargestellten Energieabsorbtionselementen 1, 1', 1'', 1''' bestehen aus jeweils drei gleichen oder unterschiedlichen stranggepressten Mehrkammerhohlprofilen 10, 11, 12, 13, 14, 15, 16. Im Gegensatz zu bekannten Aufprallträgern werden mindestens zwei Mehrkammerhohlprofile miteinander über Verbindungsmittel 30 verbunden und es werden vorzugsweise MP- bzw. MMP-Profile verwendet. Selbstverständlich lassen sich auch mehr als drei Mehrkammerhohlprofile in einem Energieabsorbtionselement anordnen.

In Fig. 1 ist ein Energieabsorbtionselement 1 gezeigt, welches aus drei gleichen Mehrkammerhohlprofilen 10 besteht. Die Mehrlcammerhohlprofile 10 weisen einen Flachprofilquerschnitt mit zwei parallelen ebenen Breitseiten 20, 21 auf, die zusammen mit den Schmalseiten 22, 23 die Außenwandung des Mehrkammerhohlprofiles 10 darstellen. Jedes Hohlprofil 10 besitzt mehrere in Profilrichtung verlaufende Kammern 25, die durch senkrecht auf den Breitseiten 20, 21 angeordneten Innenwänden 24 von einander getrennt sind. Die Wanddicke d1 der Außenwandung, d. h. der Breitseiten 20, 21 und Schmalseiten 22, 23, beträgt 0,3 mm. Die die Kammern 25 begrenzenden Innenwände 24 weisen eine Wanddicke d2 von 0,2 mm auf. Die Mehrkammerhohlprofile 10 sind über eine Klebeverbindung 30 miteinander verbunden. Der Klebstoff zwischen den Mehrkammerhohlprofilen 10 gewährleistet eine schubfeste Verbindung dieser Mehrkammerhohlprofile 10 in dem Energieabsorbtionselement 1. Ein solches Energieabsorbtionselement 1 wird beispielsweise so in ein Fahrzeug eingebaut, dass die Breitseiten 20, 21 im wesentlichen senkrecht zu einer zu erwartenden Krafteinwirkung F ausgerichtet sind. Die Kraft-Verformungsweg-Kennlinie eines solchen Energieabsorbtionselementes 1 würde so aussehen, dass die Kraft F solange linear ansteigt bis sie auf die Breitseite 20 des ersten Mehrkammerhohlprofils 10 auftrifft, dann wird die Stoßenergie von diesem Mehrkammerhohlprofil 10 aufgenommen. Das Hohlprofil 10 verformt sich, wodurch sich der Anstieg der Kennlinie im Kraft-Weg-Diagramm verringert. Aufgrund der gleichartigen Mehrkammerhohlprofile 10 im Energieabsorbtionselement 1 bleibt der Anstieg der Kennlinie bei weiterer konstanter Krafteinwirkung F erhalten.

Fig. 2 zeigt ein weiteres Energieabsorbtionselement 1'. Dieses Energieabsorbtionselement 1' besteht aus unterschiedlichen Mehrkammerhohlprofilen 11, 12, 16. Die unterschiedlichen Mehrkammerhohlprofile 11, 12, 16 weisen eine gleiche Breite b auf, jedoch unterschiedliche Höhen. Das Mehrkammerhohlprofil 11 besitzt die geringste Höhe h 11. Darunter angeordnet ist das Mehrkammerhohlprofil 16, mit der größten Höhe h 16. Das am weitesten von einer Krafteinwirkung F entfernte Mehrkammerhohlprofil 12 besitzt eine Höhe h 12. Darüber hinaus besitzen die Mehrkammerhohlprofile 11, 12, 16 unterschiedlich viele Kammern 25. Durch die Anzahl der Kammern und die Variation der Höhe der Mehrkammerhohlprofile wird unterschiedlich viel kinetische Energie von den einzelnen Mehrkammerhohlprofilen 11, 12, 16 aufgenommen.

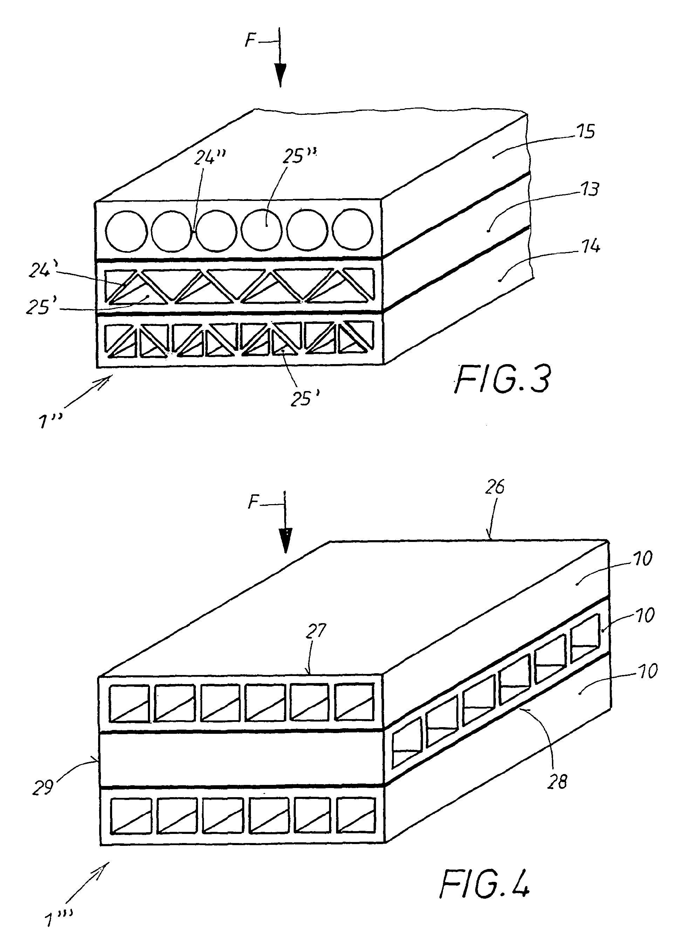

In der Fig. 3 ist ein Energieabsorbtionselement 1'', bestehend aus Mehrkammerhohlprofilen 13, 14, 15 gezeigt, wobei diese Mehrkammerhohlprofile 13, 14, 15 unterschiedlich geformte Kammern 25', 25'' besitzen. In den Fig. 1 und 2 waren jeweils Kammerquerschnitte in Rechteckform zu sehen. Bei dem Energieabsorbtionselement 1." sind dreieckförmige Kammerquerschnitte 25' bzw. runde Kammerquerschnitte 25'' gezeigt. Die in Profillängsrichtung zylinderartigen Kammern 25'' werden durch Innenwände 24'' voneinander getrennt, wobei ausgehend von den Breitseiten die Innenwände 24'' sich zur Mitte des Profiles verjüngen und dann wieder verbreitern. Die dreieckiggeformten Kammern 25' ergeben sich durch Innenwände 24', die schräg zu den Breitseiten im Mehrkammerhohlprofil 13 angeordnet sind. Im Mehrkammerhohlprofil 14 sind zusätzlich zu den schräg angeordneten Innenwänden 24' senkrecht auf den Breitseiten stehende Innenwände 24 vorgesehen, so dass zwischen zwei schräg angeordneten Innenwänden 24' eine senkrecht angeordnete Innenwand 24 den Raum zwischen den zwei schräg angeordneten Innenwänden 24' in zwei dreickförmige Kammern 25' aufteilt. Die unterschiedlich geformten bzw. angeordneten Innenwände 24, 24', 24'' weisen bei gleichem Gewicht ein unterschiedliches Knickverhalten auf. Dies kann bei Energieabsorbtionselementen von Interesse sein, wo eine Krafteinwirkung F nicht nur senkrecht erfolgt. Die in dem Energieabsorbtionselement 1'' vorgesehenen Mehrkammerprofile 13, 14 und 15 lassen sich selbstverständlich in beliebiger Weise auch mit anderen Mehrkammerhohlprofilen 10, 11, 12, 16 zu einem gewünschten Energieabsorbtionselement kombinieren.

In den Fig. 1, 2 und 3 sind Energieabsorbtionselemente 1, 1', 1'' gezeigt, bei denen die Kammern 25, 25', 25'' der Mehrkammerprofile zwischen den Enden 26, 27 der Energieabsorbtionselemente 1, 1', 1'' in eine Richtung verlaufen.

In Fig. 4 wird ein Energieabsorbtionselement 1''' gezeigt, bei dem die Mehrkammerprofile 10 unterschiedlich ausgerichtet aufeinandergestapelt und miteinander verbunden sind. Das oberste Mehrkammerprofil 10 besitzt rechteckförmige Kammern, die zwischen den Enden 26, 27 parallel zueinander verlaufen. Die Kammern des untersten Mehrkammerprofils 10 sind in gleicher Richtung ausgerichtet. Das mittlere Mehrkammerprofil 10 ist so ausgerichtet, dass die zwischen den Enden 28 und 29 verlaufenden Kammern senkrecht zu den darüber oder darunter angeordneten Mehrkammerprofilen ausgerichtet sind.

Die gezeigten Ausführungsbeispiele für Energieabsorbtionselemente 1, 1', 1'', 1''' zeigen die Vielzahl an Variationsmöglichkeiten auf, wie mit Hilfe von Mehrkammerprofilen ein gewünschtes Energieabsorbtionselement hergestellt werden kann. Die Erfindung ist nicht auf die gezeigten Ausführungsbeispiele beschränkt.

### Bezugszeichenliste:

- 1,1',1'',1''': Verbundprofil
- 10,11,12,13,14,15,16: Mehrkammerprofil
- 20,21: Breitseite
- 22,23: Schmalseite
- 24,24',24'': Innenwand
- 25,25',25'': Kammer
- 26,27,28,29: Enden
- 30: Verbindungsmittel

- b: Breite
- d1: Dicke Außenwandung
- d2: Dicke Innenwand
- h11: Höhe von 11
- h12: Höhe von 12
- h16: Höhe von 16

- F: Kraft

## Patentansprüche

1. Energieabsorbtionselement aus mindestens zwei stranggepressten Mehrkammerhohlprofilen (10, 11, 12, 13, 14, 15, 16) aus Aluminium oder einer Aluminiumlegierung, welche einen Flachprofilquerschnitt mit zwei parallelen Breitseiten (20, 21) und gewölbten oder ebenen Schmalseiten (22, 23) aufweisen, wobei die Mehrkammerhohlprofile (10, 11, 12, 13, 14, 15, 16) an ihren parallelen Breitseiten (20, 21) fest miteinander verbunden sind,
**dadurch gekennzeichnet, dass**
gleiche oder unterschiedliche Mehrkammerhohlprofile (10, 11, 12, 13, 14, 15, 16) hintereinander im Energieabsorptionselement (1, 1', 1'', 1''') angeordnet sowie mit ihren Breitseiten (20, 21) entgegen einer möglichen einwirkenden Kraft (F) ausgerichtet sind und die Mehrkammerhohlprofile (10, 11, 12, 13, 14, 15, 16) jeweils eine Breite b und eine Höhe h besitzen, wobei das Verhältnis von Breite b zu Höhe h im Bereich von
b : h = 3 : 1 bis b : h = 40 : 1 liegt und
Mehrkammerhohlprofile (10, 11, 12, 13, 14, 15, 16) mit gleichen und/oder unterschiedlichen Wanddicken (d1) der Außenwandung (20, 21, 22, 23) vorgesehen sind, wobei die Wanddicke (d1) der Außenwandung (20, 21, 22, 23) im Bereich von 0.15 bis 3 mm liegt.

2. Energieabsorbtionselement gemäß Anspruch 1, **dadurch gekennzeichnet, dass** die Mehrkammerhohlprofile (10, 11, 12, 13, 14, 15, 16) mindestens 3 in Profillängsrichtung verlaufende Kammern (25, 25', 25'') besitzen.

3. Energieabsorbtionselement gemäß Anspruch 2, **dadurch gekennzeichnet, dass** Mehrkammerhohlprofile (10, 11, 12, 13, 14, 15, 16) mit gleicher und/oder unterschiedlicher Anzahl von Kammern (25, 25', 25'') vorgesehen sind.

4. Energieabsorbtionselement gemäß Anspruch 2 oder 3, **dadurch gekennzeichnet, dass** die Kammern (25) in den Mehrkammerhohlprofilen (10, 11, 12) von ebenen, senkrecht zwischen den Breitseiten (20, 21) angeordneten und in Profillängsrichtung verlaufenden Innenwänden (24) begrenzt werden, so dass sich rechteckige Kammerquerschnitte ergeben.

5. Energieabsorbtionselement gemäß Anspruch 2 oder 3, **dadurch gekennzeichnet, dass** die Kammern (25') in den Mehrkammerhohlprofilen (13, 14) von ebenen, senkrecht und/ oder schräg zwischen den Breitseiten (20, 21) angeordneten und in Profillängsrichtung verlaufenden Innenwänden (24, 24') begrenzt werden, so dass sich dreieckige Kammerquerschnitte ergeben.

6. Energieabsorbtionselement gemäß Anspruch 2 oder 3, **dadurch gekennzeichnet, dass** die Kammern (25'') in den Mehrkammerhohlprofilen (15) von gewölbten, zwischen den Breitseiten (20, 21) angeordneten und in Profillängsrichtung verlaufenden Innenwänden (24'') begrenzt werden.

7. Energieabsorbtionselement gemäß den Ansprüchen 4 bis 6, **dadurch gekennzeichnet, dass** Mehrkammerhohlprofile (10, 11, 12, 13, 14, 15, 16) mit gleichen und/oder unterschiedlichen Kammerquerschnitten vorgesehen sind.

8. Energieabsorbtionselement nach Anspruch 1, **dadurch gekennzeichnet, dass** Mehrkammerhohlprofile (10, 11, 12, 13, 14, 15, 16) mit gleichen und/oder unterschiedlichen Breiten b vorgesehen sind.

9. Energieabsorbtionselement gemäß Anspruch 1, **dadurch gekennzeichnet, dass** Mehrkammerhohlprofile (10, 11, 12, 13, 14, 15, 16) mit gleichen und/oder unterschiedlichen Höhen h vorgesehen sind.

10. Energieabsorbtionselement gemäß einem der Ansprüche 1 bis 9, **dadurch gekennzeichnet, dass** die Mehrkammerhohlprofile (10, 11, 12, 13, 14, 15, 16) eine Wanddicke (d1) der Außenwandung (20, 21, 22, 23) im Bereich von 0.15 bis 1mm, bevorzugt 0.15 bis 0.5 mm besitzen.

11. Energieabsorbtionselement gemäß einem der Ansprüche 1 bis 10, **dadurch gekennzeichnet, dass** die Mehrkammerhohlprofile (10, 11, 12, 13, 14, 15, 16) eine Wanddicke (d2) der die Kammern (25, 25', 25'') begrenzenden Innenwände (24, 24', 24'') im Bereich von 0.1 bis 3 mm, vorzugsweise 0.1 bis 1mm, besonders bevorzugt 0.1 bis 0.5 mm aufweisen.

12. Energieabsorbtionselement gemäß Anspruch 11, **dadurch** gekenntzeichnet, dass Mehrkammerhohlprofile Mehrkammerhohlprofile (10, 11, 12, 13, 14, 15, 16) mit gleichen und/oder unterschiedlichen Wanddicken (d2) der Stege vorgesehen sind.

13. Energieabsorbtionselement gemäß einem der Ansprüche 1 bis 12, **dadurch gekennzeichnet, dass** die Mehrkammerhohlprofile (10, 11, 12, 13, 14, 15, 16) miteinander formschlüssig verbunden sind, vorzugsweise durch Weichlöten oder durch Hartlöten oder Kleben.

14. Energieabsorbtionselement gemäß Anspruch 13, **dadurch gekennzeichnet, dass** die Mehrkammerhohlprofile (10, 11, 12, 13, 14, 15, 16) miteinander durch einen warmaushärtbaren Klebstoff (30) verbunden sind.

15. Energieabsorbtionselement gemäß einem der Ansprüche 1 bis 14, **dadurch gekennzeichnet, dass** die miteinander formschlüssig verbundenen gleichen oder unterschiedlichen Mehrkammerhohlprofile (10, 11, 12, 13, 14, 15, 16) so zueinander ausgerichtet sind, dass die Längsachsen benachbarter Mehrkammerhohlprofile (10, 11, 12, 13, 14, 15, 16) parallel zueinander verlaufen.

16. Energieabsorbtionselement gemäß einem der Ansprüche 1 bis 14, **dadurch gekennzeichnet, dass** die miteinander formschlüssig verbundenen gleichen oder unterschiedlichen Mehrkammerhohlprofile (10, 11, 12, 13, 14, 15, 16) so zueinander ausgerichtet sind, dass Längsachsen benachbarter Mehrkammerhohlprofile (10, 11, 12, 13, 14, 15, 16) in einem Winkel zueinander verlaufen.

17. Verfahren zum Herstellen eines Energieabsorbtionselementes, indem Mehrkammerhohlprofilstränge aus Aluminium oder einer Aluminiumlegierung mit einen Flachprofilquerschnitt mit zwei parallelen Breitseiten (20, 21) und gewölbten oder ebenen Schmalseiten (22, 23) und mit mindestens 3 in Profillängsrichtung verlaufenden Kammern ( 25, 25', 25'') stranggepresst werden, die noch warmen die Strangpresse verlassenden Mehrkammerhohlprofilstränge mit einem Verbindungsmittel (30) beschichtet werden,
nach dem Abkühlen die beschichteten Mehrkammerhohlprofilstränge auf die gewünschten Längen der Mehrkammerhohlprofile (10, 11, 12, 13, 14, 15, 16) abgelängt werden,
der Vorgang für einen anderen Profilquerschnitt wiederholt wird und
gleiche und/oder unterschiedliche Mehrkammerhohlprofile (10, 11, 12, 13, 14, 15, 16) übereinander angeordnet und miteinander verbunden werden.

18. Verfahren nach Anspruch 17, **dadurch gekennzeichnet, dass** Mehrkammerhohlprofilstränge mit angeformten Verbindungsmitteln strangepresst werden, die eine Klipsverbindung der Mehrkammerhohlprofile im Energieabsorbtionselement ermöglichen.

19. Verfahren nach Anspruch 17 oder 18, **dadurch gekennzeichnet, dass** es sich bei dem Verbindungsmittel (30), mit welchem die Breitseiten (20, 21) der stranggepressten Mehrkammerhohlprofilstränge beschichtet werden, um Zink oder eine Hartlotmischung oder einen Klebstoff handelt.

20. Verfahren nach Anspruch 19, **dadurch gekennzeichnet, dass** es sich bei dem Klebstoff um einen wärmeaushärtbaren Klebstoff handelt.

21. Verfahren nach Anspruch 19 oder 20, **dadurch gekennzeichnet, dass** die Verbindung der Mehrkammerhohlprofile (10, 11, 12, 13, 14, 15, 16) durch Wärmeeinwirkung erfolgt.

22. Verfahren nach Anspruch 21, **dadurch gekennzeichnet, dass** die Mehrkammerhohlprofile (10, 11, 12, 13, 14, 15, 16) aus einer warmaushärtbaren Aluminiumlegierung bestehen, wobei die Warmaushärtung und die Aushärtung des Klebstoffs zur Verbindungsbildung der Mehrkammerhohlprofile (10, 11, 12, 13, 14, 15, 16) in einem Verfahrensschritt erfolgt.

## Claims

1. Energy absorption element consisting of at least two extruded multichamber hollow profiles (10, 11, 12, 13, 14, 15, 16) of aluminum or an aluminum alloy, which have a flat profile section with two parallel wide sides (20, 21) and curved or flat narrow sides (22, 23), with the multichamber hollow profiles (10, 11, 12, 13, 14, 15, 16) being permanently joined to each other on their parallel wide sides (20, 21),
**characterized in that**
equal or different multichamber hollow profiles (10, 11, 12, 13, 14, 15, 16) are arranged in series in the energy absorption element (1, 1', 1'', 1''') with their wide sides (20, 21) aligned against a possible acting force (F) and the multichamber hollow profiles (10, 11, 12, 13, 14, 15, 16) each having a width b and a height h, with the ratio of the width b to the height h being in the
b : h = 3 : 1 to b : h = 40 : 1 range and
multichamber hollow profiles (10, 11, 12, 13, 14, 15, 16) being provided with equal and/or different thicknesses (d1) of the outer wall (20, 21, 22, 23), with the thickness (d1) of the outer wall (20, 21, 22, 23) being in the 0.15 to 3 mm range.

2. Energy absorption element according to Claim 1, **characterized in that** the multichamber hollow profile (10, 11, 12, 13, 14, 15, 16) has at least three chambers (25, 25' 25'') running in the longitudinal direction of the profile.

3. Energy absorption element according to Claim 2, **characterized in that** the multichamber hollow profile (10, 11, 12, 13, 14, 15, 16) is provided with an equal and/or different number of chambers (25, 25' 25'').

4. Energy absorption element according to Claim 2 or 3, **characterized in that** the chambers (25) in the multichamber hollow profiles (10, 11, 12) are bounded by flat inner walls (24) arranged vertically between the wide sides (20, 21) and running in the longitudinal direction of the profile, so that rectangular chamber cross-sections result.

5. Energy absorption element according to Claim 2 or 3, **characterized in that** the chambers (25') in the multichamber hollow profiles (13, 14) are bounded by flat inner walls (24, 24') arranged vertically and/or obliquely between the wide sides (20, 21) and running in the longitudinal direction of the profile, so that triangular chamber cross-sections result.

6. Energy absorption element according to Claim 2 or 3, **characterized in that** the chambers (25'') in the multichamber hollow profiles (15) are bounded by curved inner walls (24'') arranged between the wide sides (20, 21) and running in the longitudinal direction of the profile.

7. Energy absorption element according to Claims 4 to 6, **characterized in that** the multichamber hollow profiles (10, 11, 12, 13, 14, 15, 16) are provided with equal and/or different chamber cross-sections.

8. Energy absorption element according to Claim 1, **characterized in that** multichamber hollow profiles (10, 11, 12, 13, 14, 15, 16) are provided with equal or different widths b.

9. Energy absorption element according to Claim 1, **characterized in that** the multichamber hollow profiles (10, 11, 12, 13, 14, 15, 16) are provided with equal and/or different heights h.

10. Energy absorption element according to one of Claims 1 to 9, **characterized in that** the multichamber hollow profiles (10, 11, 12, 13, 14, 15, 16) have a thickness (d1) of the outer wall (20, 21, 22, 23) of between 0.15 to 1 mm preferably between 0.15 to 0.5 mm.

11. Energy absorption element according to one of Claims 1 to 10, **characterized in that** the multichamber hollow profiles (10, 11, 12, 13, 14, 15, 16) have a thickness (d2) of the inner walls (24, 24', 24'') bordering the chambers (25, 25', 25'') of between 0.1 to 3 mm preferably between 0.1 to 1 mm, with a thickness of 0.1 to 0.5 mm being especially preferred.

12. Energy absorption element according to Claim 11, **characterized in that** the multichamber hollow profiles (10, 11, 12, 13, 14, 15, 16) with equal and/or different thickness (d2) of the webs are provided.

13. Energy absorption element according to one of Claims 1 to 12, **characterized in that** the multichamber hollow profiles (10, 11, 12, 13, 14, 15, 16) are joined to each other by an interlocking connection, preferably by soldering, brazing or bonding.

14. Energy absorption element according to Claim 13, **characterized in that** the multichamber hollow profiles (10, 11, 12, 13, 14, 15, 16) are joined to each other by a thermosetting adhesive (30).

15. Energy absorption element according to one of Claims 1 to 14, **characterized in that** the equal or different multichamber hollow profiles (10, 11, 12, 13, 14, 15, 16) that are joined to each other by an interlocking connection are aligned relative to each other in such a way that the longitudinal axes of adjacent multichamber hollow profiles (10, 11, 12, 13, 14, 15, 16) run parallel to each other.

16. Energy absorption element according to one of Claims 1 to 14, **characterized in that** the equal or different multichamber hollow profiles (10, 11, 12, 13, 14, 15, 16) that are joined to each other by an interlocking connection are aligned relative to each other in such a way that the longitudinal axes of adjacent multichamber hollow profiles (10, 11, 12, 13, 14, 15, 16) run at an angle relative to each other.

17. Method for the production of an energy absorption element, in that multichamber hollow profile extrusions of aluminum or an aluminum alloy are extruded with a flat profile cross-section with two parallel wide sides (20, 21) and curved or flat narrow sides (22, 23) and with at least three chambers (25, 25', 25'') running in the longitudinal direction of the profile,
with the multichamber hollow profile extrusions being coated with a jointing means (30) while they are still hot as they leave the extrusion press,
after the coated multichamber hollow profile extrusions have cooled down, said extrusions being cut to the required length of the multichamber hollow profiles (10, 11, 12, 13, 14, 15, 16),
with the process being repeated for a different profile cross-section and
equal and/or different multichamber hollow profiles (10, 11, 12, 13, 14, 15, 16) being arranged one above the other and joined together.

18. Method according to Claim 17, **characterized in that** the multichamber hollow profile extrusions are extruded with an integral jointing means which enables a clip connection of the multichamber hollow profiles in the energy absorption element.

19. Method according to Claim 17 or 18, **characterized in that** the jointing means (30) with which the wide sides (20, 21) of the extruded multichamber hollow profile extrusions are coated, is zinc or a mixture of brazing solder or an adhesive.

20. Method according to Claim 19, **characterized in that** the adhesive is a thermosetting adhesive.

21. Method according to Claim 19 or 20, **characterized in that** the joining of the multichamber hollow profiles (10, 11, 12, 13, 14, 15, 16) is achieved by the effect of heat.

22. Method according to Claim 21, **characterized in that** the multichamber hollow profiles (10, 11, 12, 13, 14, 15, 16) consist of a thermosetting aluminum alloy with the thermosetting and a hardening of the adhesive for the joining multichamber hollow profiles (10, 11, 12, 13, 14, 15, 16) takes place in one process step.

## Revendications

1. Élément amortisseur composé d'au moins deux profilés creux extrudés multichambres (10, 11, 12, 13, 14, 15, 16) en aluminium ou en alliage d'aluminium, présentant une section profilée plate avec deux côtés longs parallèles (20, 21) et deux côtés larges incurvés ou plats (22, 23), les profilés creux multichambres (10, 11, 12, 13, 14, 15, 16) étant fermement reliés entre eux par leurs côtés longs parallèles (20, 21),
**caractérisé en ce que**
des profilé creux multichambres identiques ou différents (10, 11, 12, 13, 14, 15, 16) sont agencés les uns derrière les autres dans l'élément amortisseur (1, 1', 1'', 1''') et que leurs côtés longs (20, 21) sont dirigés en sens opposé à celui d'une force (F) susceptible d'agir et **en ce que** les profilé creux multichambres (10, 11, 12, 13, 14, 15, 16) possèdent respectivement une longueur b et une hauteur h, le rapport entre la longueur b et la hauteur h étant compris entre
b : h = 3 : 1 à b : h = 40 : 1, et **en ce que**
les profilés creux multichambres (10, 11, 12, 13, 14, 15, 16) sont prévus dotés d'épaisseurs (d1) de paroi extérieure (20, 21, 22, 23) identiques et/ou différentes, l'épaisseur (d1) de la paroi extérieure (20, 21, 22, 23) étant comprise entre 0,15 à 3 mm.

2. Élément amortisseur selon la revendication 1, **caractérisé en ce que** les profilés creux multichambres (10, 11, 12, 13, 14, 15, 16) possèdent au moins 3 chambres (25, 25', 25'') au tracé correspondant au sens longitudinal du profilé.

3. Élément amortisseur selon la revendication 2, **caractérisé en ce que** des profilés creux multichambres (10, 11, 12, 13, 14, 15, 16) sont prévus avec un nombre identique et/ou différent de chambres (25, 25', 25'').

4. Élément amortisseur selon la revendication 2 ou 3, **caractérisé en ce que** les chambres (25) dans les profilés creux multichambres (10, 11, 12) sont limitées par des parois intérieures (24) planes, agencées verticales entre les côtés longs (20, 21) et d'un tracé correspondant au sens longitudinal du profilé, ce qui donne des sections de chambre rectangulaires.

5. Élément amortisseur selon la revendication 2 ou 3, **caractérisé en ce que** les chambres (25') dans les profilés creux multichambres (13, 14) sont limitées par des parois intérieures (24, 24') planes, agencées verticales et/ou obliques entre les côtés longs (20, 21) et d'un tracé correspondant au sens longitudinal du profilé, ce qui donne des chambres de section triangulaire.

6. Élément amortisseur selon la revendication 2 ou 3, **caractérisé en ce que** les chambre (25'') situées dans les profilés creux multichambres (15) sont limitées par des parois intérieures (24'') voûtées, agencées entre les côtés longs (20, 21) et d'un tracé correspondant au sens longitudinal du profilé.

7. Élement amortisseur selon les revendications 4 à 6, **caractérisé en ce que** des profilés creux multichambres (10, 11, 12, 13, 14, 15, 16) sont prévus avec des sections de chambre identiques et/ou différentes.

8. Élément amortisseur selon la revendication 1, **caractérisé en ce que** des profilés creux multichambres (10, 11, 12, 13, 14, 15, 16) sont prévus dotés de longueurs b identiques et/ou différentes.

9. Élément amortisseur selon la revendication 1, **caractérisé en ce que** des profilés creux multichambres (10, 11, 12, 13, 14, 15, 16) sont prévus avec des hauteurs h identiques et/ou différentes.

10. Élément amortisseur selon l'une des revendications 1 à 9, **caractérisé en ce que** les profilés creux multichambres (10, 11, 12, 13, 14, 15, 16) possèdent une épaisseur (d1) de paroi extérieure (20, 21, 22, 23) située dans une plage de 0,15 à 1 mm, de préférence de 0,15 à 0,5 mm.

11. Élément amortisseur selon l'une des revendications 1 à 10, **caractérisé en ce que** les profilés creux multichambres (10, 11, 12, 13, 14, 15, 16) présentent des parois intérieures (24, 24', 24'') limitant les chambres (25, 25', 25'') et dont l'épaisseur (d2) est comprise entre 0,1 à 3 mm, de préférence entre 0,1 à 1 mm, et de préférence particulière entre 0,1 à 0,5 mm.

12. Élément amortisseur selon la revendication 11, **caractérisé en ce que** sont prévus des profilés creux multichambres (10, 11, 12, 13, 14, 15, 16) dont les épaisseurs de paroi (d2) des nervures sont identiques et/ou différentes.

13. Élément amortisseur selon l'une des revendications 1 à 12, **caractérisé en ce que** les profilés creux multichambres (10, 11, 12, 13, 14, 15, 16) sont reliés entre eux par adhérence de formes, de préférence par brasage doux ou brasage fort ou collage.

14. Élément amortisseur selon la revendication 13, **caractérisé en ce que** les profilés creux multichambres (10, 11, 12, 13, 14, 15, 16) sont reliés entre eux par une colle (30) thermodurcissable.

15. Élément amortisseur selon l'une des revendications 1 à 14, **caractérisé en ce que** les profilés creux multichambres (10, 11, 12, 13, 14, 15, 16) identiques ou différents reliés entre eux par adhérence des formes sont orientés les uns sur les autres de sorte que les axes longitudinaux de profilés creux multichambres voisins (10, 11, 12, 13, 14, 15, 16) ont un tracé parallèle.

16. Élément amortisseur selon l'une des revendications 1 à 14, **caractérisé en ce que** les profilés creux multichambres (10, 11, 12, 13, 14, 15, 16) identiques ou différents reliés entre eux par adhérence de formes sont orientés les uns sur les autres de sorte que les axes longitudinaux de profilés creux multichambres voisins (10, 11, 12, 13, 14, 15, 16) ont un tracé formant un angle.

17. Procédé de fabrication d'un élément amortisseur consistant à extruder des boudins profilés creux multichambres en aluminium ou en alliage d'aluminium, présentant une section profilée plate à deux côtés longs (20, 21) et des côtés étroits incurvés ou plats (22, 23) et avec au moins 3 chambres (25, 25', 25'') d'un tracé correspondant au sens longitudinal du profilé,
les boudins de profilés creux multichambres encore chauds, en train de quitter la presse d'extruction, étant enduits d'un moyen de liaison (30),
après le refroidissement, les boudins profilés creux multichambres enduits étant sectionnés pour conférer aux profilés creux multichambres (10, 11, 12, 13, 14, 15, 16) les longueurs voulues,
l'opération étant répétée pour une autre section de profilé et
des profilés creux multichambres identiques et/ou différents (10, 11, 12, 13, 14, 15, 16) étant superposés et reliés entre eux.

18. Procédé selon la revendication 17, **caractérisé en ce que** les boudins de profilés creux multichambres sortent de presse dotés de moyens de liaison moulés contre et qui permettent une jonction par clipsage des profilés creux multichambres dans l'élément amortisseur.

19. Procédé selon la revendication 17 ou 18, **caractérisé en ce que** le moyen de liaison (30) dont sont enduits les côtés longs (20, 21) des boudins extrudés des profilés creux multichambres est du zinc ou un mélange pour brasage fort ou une colle.

20. Procédé selon la revendication 19, **caractérisé en ce que** la colle est une colle thermodurcissable.

21. Procédé selon la revendication 19 ou 20, **caractérisé en ce que** la jonction des profilés creux multichambres (10, 11, 12, 13, 14, 15, 16) est obtenue par pénétration de chaleur.

22. Procédé selon la revendication 21, **caractérisé en ce que** les profilés creux multichambres (10, 11, 12, 13, 14, 15, 16) se composent d'un alliage à l'aluminium thermodurcissable, le thermodurcissement et le durcissement de la colle dans le but de former la jonction entre profilés creux multichambres (10, 11, 12, 13, 14, 15, 16) ayant lieu en une étape de procédé.
